**Europäisches Patentamt**

**European Patent Office**

**Office européen des brevets**

(19)

(11) Veröffentlichungsnummer: **0 022 200**
**A1**

(12) **EUROPÄISCHE PATENTANMELDUNG**

(21) Anmeldenummer: 80103453.9

(22) Anmeldetag: 20.06.80

(51) Int. Cl.³: **C 08 L 25/12**

(30) Priorität: 07.07.79 DE 2927572

(43) Veröffentlichungstag der Anmeldung:
14.01.81 Patentblatt 81.2

(84) Benannte Vertragsstaaten:
AT BE CH DE FR GB IT LI LU NL SE

(71) Anmelder: BASF Aktiengesellschaft
Carl-Bosch-Strasse 38
D-6700 Ludwigshafen(DE)

(72) Erfinder: Brandstetter, Franz, Dr.
Ritterbuechel 45
D-6730 Neustadt(DE)

(72) Erfinder: McKee, Graham Edmund, Dr.
Kastanienweg 8
D-6940 Weinheim(DE)

(72) Erfinder: Scharf, Bernhard, Dr.
Branichstrasse 3
D-6905 Schriesheim(DE)

(72) Erfinder: Bergmann, Klaus, Dr.
Kekuleplatz 7
D-6700 Ludwigshafen(DE)

(72) Erfinder: Echte, Adolf, Dr.
Leuschnerstrasse 42
D-6700 Ludwigshafen(DE)

(72) Erfinder: Overhoff, Heinz-Juergen, Dr.
Max-Slevogt-Strasse 13b
D-6710 Frankenthal(DE)

(72) Erfinder: Schwaab, Josef, Dr.
Rieslingweg 8
D-6735 Maikammer(DE)

(54) Thermoplastische Formmassen und Formteile aus diesen.

(57) Die Erfindung betrifft eine ABS-Formmasse, die aufgebaut ist, aus
A einem Mischpolymerisat als Matrix, in der
B ein Pfropfmischpolymerisat verteilt ist.

Das Pfropfmischpolymerisat B ist aufgebaut aus Styrol und Acrylnitril als Propfmonomeren auf Polybutadien als Pfropfgrundlage und soll einen mittleren Teilchendurchmesser von 0,2 bis 0,45 µm ($d_w$-Wert der integralen Masseverteilung) aufweisen. Der aus den Formmassen isolierte Gel-Anteil muß eine Relaxationszeit im Bereich von 0,7 bis 1,5 ms aufweisen, damit die Formmassen bei einem hohen Wert für den Oberflächenglanz gleichzeitig eine gute Kerbschlagzähigkeit, auch bei tiefen Temperaturen besitzen. Das Mischpolymerisat A kann ein Copolymerisat aus Styrol und Acrylnitril oder einem Tercopolymerisat unter Verwendung von α-Methylstyrol sein. Die Formmasse kann ferner übliche Zusatzstoffe enthalten.

Die erfindungsgemäßen Formmassen können dort Anwendung finden, wo bei gleichzeitig hohem Glanz eine gute Zähigkeit gefordert wird, wie in Haushaltsgeräten und in der Kraftfahrzeugindustrie.

EP 0 022 200 A1

**0022200**

Thermoplastische Formmassen und Formteile aus diesen

Die Erfindung betrifft Mischungen aus mit kautschukartigen Polymerisaten schlagzäh modifizierten Styrol/Acrylnitril- -Copolymerisaten, die thermoplastische Formmassen (ABS) mit hoher Schlagzähigkeit, hohem Oberflächenglanz und guten Verarbeitungseigenschaften liefern.

Es ist bekannt, thermoplastisch verarbeitbare schlagzähe Formmassen herzustellen, indem man Styrol/Acrylnitril-Copolymerisate durch Einarbeiten von Kautschuken modifiziert. Dies geschieht im allgemeinen durch Pfropfmischpolymerisation von Styrol und Acrylnitril in Gegenwart des Kautschuks sowie gegebenenfalls durch nachträgliches Abmischen dieses Pfropfproduktes mit einer separat hergestellten Hartkomponente, die im allgemeinen aus einem Styrol-Acrylnitril- -Copolymerisat besteht. Je nach Art des bei der Herstellung eingesetzten Kautschuks werden Formmassen mit unterschied- .lichem Eigenschaftsbild erhalten.

Bei den sogenannten ABS-Polymerisaten wird als Kautschuk zur Schlagfestmodifizierung Polybutadien verwendet. Die so erhaltenen Produkte besitzen eine gute Schlagzähigkeit, insbesondere auch bei sehr niedrigen Temperaturen, chemische Beständigkeit und gute Verarbeitbarkeit. Ein Verfahren, das in technisch einfacher Weise zu solchen Formmassen führt, ist beispielsweise Gegenstand der DE-AS 24 27 960.

0022200

Es zeigt sich aber, daß bekannte Formmassen entweder eine sehr gute Zähigkeit, die durch einen hohen Kautschukanteil und/oder durch große Kautschukteilchen erzielt wird, oder gute Glanzeigenschaften aufweisen; die letztgenannte Eigenschaft wird mit kleinen Kautschukteilchen erreicht. Eine Kombination von sehr hoher Schlagzähigkeit und sehr gutem Glanz war bisher nicht möglich. Es bestand daher die Aufgabe, Produkte zu schaffen, die eine sehr gute Schlagzähigkeit, insbesondere auch bei niederen Temperaturen besitzen, aus denen Formkörper unter den unterschiedlichsten Verarbeitungsbedingungen mit einem hohen Oberflächenglanz hergestellt werden können.

Diese Aufgabe wird erfindungsgemäß gelöst.

Die Erfindung betrifft daher thermoplastische Formmassen enthaltend

A) wenigstens ein aus einer harten Phase aufgebautes Mischpolymerisat, das

   $a_1$)    60 bis 80 Gew.% Styrol und/oder $\alpha$-Methylstyrol
        und
   $a_2$)    20 bis 40 Gew.% Acrylnitril

   einpolymerisiert enthält

B) wenigstens ein Pfropfmischpolymerisat in einem Anteil von 10 bis 50 Gew.%, bezogen auf A) + B), das aufgebaut ist aus

BAD ORIGINAL

b$_1$) 40 bis 80 Gew.%, bezogen auf B) eines kautschukartigen Polymerisats, das wenigstens 93 Gew.% Butadien einpolymerisiert enthält und

b$_2$) 60 bis 20 Gew.% eines eine harte Phase bildenden
Pfropfreises aus den Monomeren Styrol und Acrylnitril in einem Gewichtsverhältnis von 80:20 bis
65:35 und wobei das Pfropfmischpolymerisat durch Aufpfropfen
des Gemisches der Monomeren B$_2$) auf das kautschukartige Polymerisat erhalten worden ist,

C) gegebenenfalls üblichen Zusatzstoffen in wirksamen Mengen.

Diese Formmasse ist dadurch gekennzeichnet, daß das Pfropfmischpolymerisat B) aus Teilchen aufgebaut ist, die einen
mittleren Teilchendurchmesser von 0,2 bis 0,45 μm (d$_{50}$-Wert
der integralen Masseverteilung) aufweisen und die Relaxationszeit des aus der Formmasse isolierten, unlöslichen
Anteils 0,7 bis 1,5 ms beträgt.

Das in den erfindungsgemäßen Formmassen enthaltene Mischpolymerisat A ist aus einem oder mehreren Copolymerisaten
von Styrol und/oder α-Methylstyrol mit Acrylnitril aufgebaut. Der Acrylnitrilgehalt an diesen Copolymerisaten des
Mischpolymerisats A soll jeweils 20 bis 40 Gew.%, bezogen
auf das jeweilige Copolymerisat, betragen. Zu diesem Mischpolymerisat A zählen auch, wie nachstehend noch erläutert,
die bei der Herstellung des Pfropfmischpolymerisates B entstehenden freien, nicht gepfropften Styrol/Acrylnitril-Copolymerisate.

Je nach den für die Herstellung des Pfropfmischpolymerisates B gewählten Bedingungen ist es möglich, daß bei der
Pfropfmischpolymerisation schon ein hinreichender Anteil
an Mischpolymerisat A gebildet wird. Im allgemeinen wird

0022200

es jedoch nötig sein, das Pfropfmischpolymerisat B mit zusätzlichem, separat hergestelltem Mischpolymerisat A zu mischen.

Bei dem separat hergestellten Mischpolymerisat A kann es sich um ein Styrol/Acrylnitril-Copolymerisat, ein α-Methylstyrol/Acrylnitril-Copolymerisat oder ein α-Methylstyrol/Styrol/Acrylnitril-Terpolymerisat handeln. Die genannten Copolymerisate können einzeln oder auch in Mischung miteinander eingesetzt werden, so daß es sich bei dem Mischpolymerisat A der erfindungsgemäßen Formmasse beispielsweise um eine Mischung aus einem Styrol/Acrylnitril-Copolymerisat und einem α-Methylstyrol/Acrylnitril-Copolymerisat handeln kann. In dem Fall, in dem das Mischpolymerisat A der erfindungsgemäßen Formmassen aus einer Mischung eines Styrol/Acrylnitril-Copolymerisates und eines α-Methylstyrol/Acrylnitril-Copolymerisat besteht, soll der Acrylnitril-Gehalt in den beiden Copolymerisaten nicht mehr als 10 Gew.%, vorzugsweise nicht mehr als 5 Gew.%, bezogen auf das jeweilige Copolymerisat, voneinader abweichen. Das Mischpolymerisat A der erfindungsgemäßen Formmassen kann jedoch auch aus einer Mischung einheitlich zusammengesetzter Styrol/Acrylnitril-Copolymerisate bestehen. Dies ist dann der Fall, wenn bei der Pfropfmischpolymerisation zur Herstellung des Pfropfmischpolymerisates B als auch bei der Herstellung des Mischpolymerisates A von dem gleichen Monomerengemisch aus Styrol und Acrylnitril ausgegangen sind.

Das Mischpolymerisat A kann nach den herkömmlichen Methoden erhalten werden. So kann die Copolymerisation des Styrols und/oder α-Methylstyrols mit Acrylnitril in Masse, Lösung, Suspension oder wäßriger Emulsion durchgeführt werden. Das Mischpolymerisat A kann eine Viskositätszahl im Bereich von 40 bis 100, insbesondere von 50 bis 85 aufweisen. Das Mischpolymerisat A ist in einem Anteil von 90 bis 50 Gew.%, bezogen auf die Summe der Komponenten A + B in der Formmasse vorhanden.

Die Herstellung des erfindungsgemäß bevorzugt einzusetzenden Emulsions-Pfropfmischpolymerisates B erfolgt in zwei Stufen. Hierzu wird zunächst ein kautschukartiges Polymerisat $b_1$ hergestellt, auf das dann in einer weiteren Verfahrensstufe in Emulsion ein Gemisch der Monomeren Styrol und Acrylnitril aufgepfropft wird (Pfropfreis $b_2$).

Zur Herstellung des kautschukartigen Polymerisats $b_1$ geht man wie folgt vor:

Die Polymerisation wird bei Temperaturen zwischen 0 und $90^{\circ}$C durchgeführt. Sie erfolgt in Gegenwart von Emulgatoren, wie Alkali-Salzen von Alkyl- oder Alkylaryl-Sulfonaten, von Alkylsulfaten, von Fettalkoholsulfonaten oder von Fettsäuren mit 10 bis 30 Kohlenstoffatomen. Vorzugsweise werden die Natriumsalze von Alkylsulfonaten oder von Fettsäuren mit 12 bis 18 Kohlenstoffatomen angewendet. Die Emulgatoren werden in Mengen von 0,3 bis 5 Gew.%, insbesondere in Mengen von 0,7 bis 2,0 Gew.%, bezogen auf die Monomeren oder das Monomerengemisch angewendet. Bei der Herstellung des kautschukartigen Polymerisats werden Puffersalze, wie Natriumbicarbonat und Natriumpyrophosphat, und als Initiatoren Persulfate oder organische Peroxyde mit Reduktionsmitteln angewendet. Erforderlich sind bei der Durchführung dieses Verfahrensschrittes Molekulargewichtsregler. Als solche kommen in Betracht:

Mercaptane, Terpene oder dimeres $\alpha$-Methylstyrol; diese können am Anfang oder während der Emulsionspolymerisation zugegeben werden. Im allgemeinen ist die Polymerisationsreaktion nach einer Zeitspanne von 5 bis 80 Stunden beendet.

Das Gewichtsverhältnis Wasser : Monomere(s) liegt im allgemeinen zwischen 2:1 und 0,7:1. Die Polymerisation wird

BAD ORIGINAL

Wirtschaftlicherweise so lange fortgesetzt, bis der größte Anteil an Monomeren polymerisiert ist. Im übrigen werden die Bedingungen in dieser ersten Verfahrensstufe so eingehalten, daß die für das kautschukartige Polymerisat $b_1$ erforderliche Relaxationszeit erreicht wird.

Die Polymerisationsbedingungen sind so zu wählen, daß das kautschukartige Polymerisat $b_1$ nach beendeter Polymerisation eine Relaxationszeit von >1 ms und bis zu 2 ms, vorzugsweise von 1,4 bis 1,8 ms aufweist. Die Relaxationszeit des kautschukartigen Polymerisats muß in jedem Falle, wie nachstehend noch erläutert, bestimmt werden, bevor die Pfropfung erfolgt. Besitzt das kautschukartige Polymerisat eine Relaxationszeit, die <1 ms ist, so können die in den Folgestufen und im Endprodukt geforderten Relaxationszeiten nicht erhalten werden. Eine Relaxationszeit, gemessen am kautschukartigen Polymerisat $b_1$ von mehr als 1 ms kann bei Polymerisationsverfahren von Butadien oder Mischungen, die bis zu 7 Gew.% -Comonomere aufweisen, durch Steuerung der Polymerisationstemperatur und/oder durch die Art, Menge und Dosierung des Reglers und/oder durch Abbruch der Reaktion bei unterschiedlichen Umsätzen erzielt werden.

So kann man ein geeignetes kautschukartiges Polymerisat $b_1$ erhalten, wenn man, wie in Beispiel 1 beschrieben, vorgeht. Man kann auch in dem in Beispiel 1 beschriebenen Polymerisationskessel bei gleichem Füllungsgrad 100 Gew.-Teile Butadien in Gegenwart von 0,8 Gew.-Tln. Natriumstearat, 0,3 Gew.-Tle Kaliumperoxodisulfat, 0,5 Gew.-Tle tert.-Dodecylmercaptan zu Beginn der Reaktion und weiteren 0,5 Gew.-Teilen tert.-Dodecylmercaptan nach 10 Stunden Reaktionszeit in 150 Gew.-Tlm Wasser bei 65°C unter Rühren bei einer Umdrehungszeit von 70 Upm bis zu einem Umsatz von 96 Gew.-%, bezogen auf Butadien, polymerisieren.

Man kann aber auch anstelle von 0,8 Gew.-Teile Natriumstearat 1,2 Gew.-Teile verwenden, wenn man zu Beginn 0,3 Gew.-Tle tert.-Dodecylmercaptan und nach 7,11 und 15 Stunden jeweils weitere 0,2 Gew.-Tle und nach 19 Stunden zusätzlich noch einmal 0,1 Gew.-Tle Regler zugibt und die Reaktion schon bei einem Umsatz von 93 Gew.-%, bezogen auf Butadien, abbricht.

Man kann ein geeignetes kautschukartiges Polymerisat $b_1$ auch dadurch erhalten, daß man in Gegenwart von 0,5 Gew.-Tln tert.-Dodecylmercaptan 0,8 Gew.-Tln Natriumstearat 100 Gew.-Tle Butadien und 146 Gew.-Tln Wasser die Reaktion bei 50°C mit 0,3 Gew.-Tln Kaliumperoxydisulfat beginnt und bei einem Umsatz von 23 Gew.-% die Temperatur auf 55°C erhöht und bei einem Umsatz von 37 Gew.-%, bezogen auf Butadien, die Temperatur erneut, und zwar auf 65°C erhöht und bis zu einem Umsatz von 98 Gew.-%, bezogen auf Butadien, weiterpolymerisiert.

Schließlich kann man auch andere Emulgatoren verwenden und Art, Menge und Dosierung des Reglers und die Polymerisationstemperatur sowie den Umsatz anhand weniger orientierender Versuche festlegen. So daß ein geeignetes kautschukartiges Polymerisat $b_1$ erhalten wird.

Als Comonomere für die Herstellung des kautschukartigen Polymerisates $b_1$ kommen Styrol und Acrylnitril in Mengen bis zu höchstens 7 Gew.% in Betracht. Vorzugsweise wird Butadien allein verwendet.

Zum erforderlichen Teilchendurchmesser von 0,2 bis 0,45 μm ($d_{50}$-Wert der integralen Massenverteilung) gelangt man entweder, indem man einen feinteiligen Kautschuklatex agglomeriert oder indem man bei der Herstellung des kautschukartigen Polymerisats $b_1$ ein bestimmtes Mo-

0022200

nomer/Wasser-Verhältnis einhält und gleichzeitig spezielle Emulgatorfahrweisen anwendet, wie sie beispielsweise in der DE-AS 1 269 360 bzw. in der GB-PS 859 080 beschrieben sind.

Geht man von einem feinteiligen Polymerlatex aus, so kann man z.B. durch Zugabe einer Dispersion eines Acrylesterpolymerisates eine Agglomeration erreichen (wie in DE-AS 24 27 960). Vorzugsweise werden Dispersionen von Copolymerisaten von Acrylestern von Alkoholen mit 1 bis 4 Kohlenstoffatomen, vorzugsweise von Äthylacrylat, mit 0,1 bis 10 Gew.% wasserlösliche Polymerisate bildenden Monomeren, Acrylamid oder Methacrylamid, eingesetzt. Besonders bevorzugt ist ein Copolymerisat aus 96 % Äthylacrylat und 4 % Methacrylamid. Die Agglomerierdispersion kann gegebenenfalls auch mehrere der genannten Acrylesterpolymerisate enthalten.

Die Konzentration der Acrylesterpolymerisate in der Dispersion soll im allgemeinen zwischen 3 und 40 Gew.% liegen. Bei der Agglomeration werden 0,2 bis 10, vorzugsweise 1 bis 5 Gewichtsteile der Agglomerierdispersion auf 100 Teile des Kautschuklatex, jeweils berechnet auf Feststoffe, eingesetzt. Die Agglomeration wird durch Zugabe der Agglomerierdispersion zum Kautschuk durchgeführt. Die Geschwindigkeit der Zugabe ist normalerweise nicht kritisch, im allgemeinen dauert sie etwa 1 bis 30 Minuten bei einer Temperatur zwischen 20 und 90°C, vorzugsweise zwischen 30 und 75°C.

Der mittlere Durchmesser ($d_{50}$-Wert) der Kautschukteilchen soll zwischen 0,20 und 0,45 um, vorzugsweise zwischen 0,26 und 0,35 um liegen. Der erhaltene, agglomerierte Kautschuklatex ist verhältnismäßig stabil, so daß er ohne weiteres gelagert und transportiert werden kann, ohne daß Koagulation eintritt.

Zur Herstellung des Pfropfmischpolymerisates B wird dann in einem weiteren Schritt in Gegenwart des agglomerierten oder direkt hergestellten Latex des kautschukartigen Polymerisats $b_1$ ein Monomerengemisch aus Styrol und Acrylnitril polymerisiert, wobei das Gewichtsverhältnis von Styrol:Acrylnitril in dem Moonomeren-Gemisch im Bereich von 80:20 bis 65:35, vorzugsweise bei 70:30, liegen soll. Bevorzugt wird die Pfropfmischpolymerisation von Styrol und Acrylnitril auf das als Pfropfgrundlage dienende kautschukartige Polymerisat $b_1$ in wäßriger Emulsion durchgeführt. Die Pfropfmischpolymerisation kann zweckmäßigerweise im gleichen System erfolgen, in dem die Emulsionspolymerisation zur Herstellung der kautschukartigen Polymerisate $b_1$ erfolgt, wobei, falls notwendig, weiterer Emulgator und Initiator zugegeben werden können.

Es werden vorzugsweise als Initiatoren an sich bekannte organische und anorganische wasserlösliche Initiatoren und hiervon insbesondere Kaliumperoxydisulfat in Mengen von 0,1 bis 0,5 Gew.%, bezogen auf die Monomeren, bzw. das Monomerengemisch Styrol und Acrylnitril angewendet. Die Polymerisationstemperatur soll im Bereich von 50 bis 80°C liegen. Das aufzupfropfende Monomerengemisch aus Styrol und Acrylnitril kann dem Reaktionsgemisch auf einmal, absatzweise oder vorzugsweise kontinuierlich während der Polymerisation zugegeben werden. Die Pfropfmischpolymerisation des Gemisches von Styrol und Acrylnitril in Gegenwart des kautschukartigen Polymerisats $b_1$ wird so geführt, daß 20 bis 60 Gew.%, vorzugsweise 35 bis 45 Gew.% Styrol-Acrylnitril in Pfropfmischpolymerisat B enthalten sind; d.h. es soll ein Pfropfgrad von 20 bis 60 Gew.%, vorzugsweise von 35 bis 45 Gew.%, resultieren. Da die Pfropfausbeute bei der Pfropfmischpolymerisation nicht zu 100 % verläuft, muß eine etwas größere Menge des Monomeren-Gemisches aus Styrol und Acrylnitril bei der Pfropfung eingesetzt werden als es dem gewünschten Pfropfgrad entspricht. Die Steuerung der Pfropfausbeute bei der Pfropfmischpolymerisation und somit die Einstellung des gewünschten Pfropfgrades bei der Pfropfmischpolymerisation ist dem Fachmann geläufig und kann beispielsweise unter anderem durch die Dosiergeschwindigkeit der Monomeren oder durch Reglerzugabe erfolgen (vgl. Chauvel, Daniel, ACS Polymer Preprints 15 (1974, S. 329 ff). Bei der Emulsions-Pfropfmischpolymerisation entstehen im allgemeinen etwa 5 bis 15 Gew.%, bezogen auf das Pfropfmischpolymerisat an freiem, nicht gepfropftem Styrol/Acrylnitril-Copolymerisat. Dieser Anteil wird nach der nachstehend noch angegebenen Methode ermittelt. Die Herstellung von Pfropfmischpolymerisaten wird u.a. auch in der DE-AS 24 27 960 oder in der DE-AS 12 69 360 beschrieben.

Die Pfropfung der Monomeren Styrol und Acrylnitril auf das eine Relaxationszeit von $>1$ ms bis 2 ms aufweisende kautschukartige Polymerisat $b_1$ muß so erfolgen, daß die Relaxationszeit des erhaltenen Pfropfmischpolymerisates im Bereich von 0,9 bis 1,5 ms liegt. Die Relaxationszeit wird nach der nachstehend beschriebenen Methode gemessen. Dies kann man erreichen, wenn z.B. insbesondere bei Temperaturen im Bereich von 65 bis 75°C und in Gegenwart von 0,3 bis 0,4 Gew.% Kaliumperoxydisulfat pfropfpolymerisiert wird.

Zu der erfindungsgemäßen Formmasse kann man auf verschiedenen Wegen gelangen. Wird schon bei der Pfropfmischpolymerisation ein hinreichender Anteil an Mischpolymerisat A gebildet, so kann man die Formmasse gegebenenfalls nach Zugabe der Zusatzstoffe C in die Dispersion durch Ausfällen aus der Dispersion und anschließendes schonendes Trocknen erhalten. In allen anderen Fällen muß die erfindungsgemäße Formmasse durch Mischen der Komponenten A

0022200

und B sowie gegebenenfalls C erzeugt werden. Das Mischen des Mischpolymerisats A mit der Komponente B zu den erfindungsgemäßen Massen kann nach an sich bekannten Methoden erfolgen. Wenn die Komponenten z.B. durch Emulsionspolymerisation hergestellt worden sind, ist es möglich, die erhaltenen Polymer-Dispersionen miteinander zu vermischen, darauf die Polymerisate gemeinsam auszufällen und das Polymerisat-Gemisch schonend aufzuarbeiten. Vorzugsweise erfolgt jedoch das Mischen der Komponenten A und B (und gegebenenfalls C) durch gemeinsames Extrudieren, Kneten oder Verwalzen der Komponenten unterhalb von 270°C. Die vorzugsweise in wäßriger Dispersion erhaltenen Pfropfmischpolymerisate B werden bevorzugt teilweise entwässert und dann als feuchte Krümel mit dem Mischpolymerisat A und gegebenenfalls mit dem Zusatzstoff C vermischt, wobei dann während des Vermischens die vollständige Trocknung erfolgt. Ein solches Verfahren ist in der DE-AS 20 37 784 beschrieben; es ist jedoch unbedingt erforderlich, daß hierbei die Massetemperatur der Mischung und bei einer Temperatur unterhalb von 270°C, vorzugsweise unterhalb von 250°C, liegt.

Die erfindungsgemäßen Formmassen können zusätzlich zu den Komponenten A und B als weitere Komponente C übliche Zusatzstoffe enthalten, wie sie für ABS-Polymerisate gebräuchlich sind. Als solche Zusatzstoffe seien beispielsweise genannt: Füllstoffe, weitere verträgliche Kunststoffe, Farbstoffe oder Pigmente, Antistatica, Antioxidantien, Flammschutzmittel und Schmiermittel. Diese Zusatzstoffe werden in üblichen und wirksamen Mengen angewendet. Als allgemeiner Bereich sei 0,1 bis 30 Gew.%, bezogen auf die Formmasse aus den Komponenten A und B, genannt. Als Antistatica eignen sich z.B. Polyäthylenglykole, Polypropylenglykole und insbesondere Copolymere aus Äthylenoxid und Propylenoxid. Außerdem kommen noch Salze von Alkyl- oder Alkylarylsulfonsäuren oder äthoxylierte langkettige Alkylamine als Antistatica in Frage.

BAD ORIGINAL

Die erfindungsgemäßen Formmassen besitzen eine Relaxationszeit von 1 bis 2 ms, vorzugsweise von 1 bis 1,4 ms, wenn
die bei der Herstellung des kautschukartigen Polymerisats
$b_1$ genannten Bedingungen eingehalten werden. Es kommt ferner
darauf an, daß das Pfropfmischpolymerisat die genannten
Bereiche der Relaxationszeit aufweist und bei der Herstellung der Formmasse unter schonenden Bedingungen gearbeitet wird. Sind alle diese Bedingungen erfüllt, so
zeigt der aus der Formmasse isolierte "unlösliche Anteil"
eine Relaxationszeit von 0,7 bis 1,5 ms, vorzugsweise
von 0,9 bis 1,3 ms. Der "unlösliche Anteil" der erfindungsgemäßen Formmasse wird, wie nachstehend noch beschrieben,
gewonnen.

Es zeigt sich nun überraschenderweise, daß die erfindungsgemäßen Formmassen nicht nur einen ausgezeichneten Oberflächenglanz, sondern auch eine sehr hohe Kerbschlagzähigkeit, insbesondere bei tiefen Temperaturen aufweisen. So
lassen sich aus den erfindungsgemäßen Formmassen Formkörper auch unter ungünstigen Verarbeitungsbedingungen mit
gutem Oberflächenglanz herstellen.

Die erfindungsgemäßen Formmassen lassen sich nach den für
die Thermoplast-Verarbeitung üblichen Verfahren, wie z.B.
Extrusion und Spritzgießen, zu den verschiedenartigsten
Formkörpern wie Gehäuse für Haushaltsgeräte, Telefone,
Platten, Rohre und Kinderspielzeug verarbeiten. Die erfindungsgemäßen Formmassen eignen sich auch zur Herstellung
von farbigen Formteilen bzw. Formkörpern der genannten Art,
wie sie insbesondere bei Gehäusen für Elektrogeräten, Kinderspielzeug und Möbel Anwendung finden.

Die in der Beschreibung und in Beispielen genannten Parameter werden wie folgt bestimmt:

Der mittlere Teilchendurchmesser ($d_{50}$-Wert der integralen Masseverteilung) resultiert aus Messungen mittels einer analytischen Ultrazentrifuge nach der Methode von W. Scholtan und H. Lange, Kolloid-Z.Polymere, 250 (1972) S. 732 bis 796. Die Pfropfausbeute und somit der Anteil des Pfropfmischpolymerisates B in dem bei der Pfropfmischpolymerisation erhaltenen Produkt kann durch Extraktion des Polymerisates mit Methyläthylketon bei 25°C bestimmt werden. Die Viskositätszahl wurde in 0,5 %iger Lösung in Dimethylformamid als Lösungsmittel bei einer Temperatur von 25°C gemessen (DIN 53 726).

Die Kerbschlagzähigkeit der erfindungsgemäßen Formmassen wird nach DIN 53 453 an gespritzten Normkleinstäben bei 23°C und bei -40°C ermittelt. Als Spritztemperatur für die Normkleinstäbe wurden 250°C gewählt.

Zur Prüfung des Glanzverhaltens der erfindungsgemäßen Formmassen werden mittels einer Spritzgußmaschine vom Typ Arburg-Allrounder, Typ 200, bei Temperaturen von 230, 255 und 280°C Platten mit den Abmessungen 50 x 40 x 2 mm bei Formtemperaturen von 30 und 60°C und Einspritzzeiten von 0,4 und 2 Sekunden hergestellt. An diesen Probekörpern wird der Glanz durch Reflektionsmessung mit einem Lange-Fotometer bestimmt. Als Standard dient weißes Vliespapier ($\hat{=}$ 0 Skalenteile) und ein Schwarzglasspiegel ($\hat{=}$ 100 Skalenteile).

Die Bestimmung der Relaxationszeit erfolgt durch NMR-Messungen mit einem NMR-Spektrometer "Minispec P 20" der Firma Bruker Analytische Meßtechnik GmbH, Karlsruhe, bei einer Temperatur von 23°C und bei 20 MHZ. Hierzu wurde der Abfall der Kernmagnetisierung ("Free Induction Decay") nach Anlegen eines 90°C Impulses beobachtet.

0022200

Für die erfindungsgemäßen Formmassen ergibt sich bei Raumtemperatur eine Meßkurve, die aus 2 Komponenten mit großer und kleiner Zeitkonstante (Spin-Spin-Relaxationszeit $T_2$) besteht. [Vgl. R.A. Asink, G.L. Wilkies, Polymer Engineering und Science, 17, 606 (1977) und T. Nishi, Rubber Chemical Technology 51, 1075 (1978)]. Dabei entspricht die Komponente mit der kleinen Zeitkonstante dem molekular unbeweglichen Mischpolymerisat A und diejenige mit der großen Zeitkonstante dem molekular beweglichen kautschukartigen Pfropfpolymerisat $b_1$. Da das Signal der Styrol/Acrylnitril-Komponente nach einer Zeit von 100 ms, gerechnet vom Beginn des $90°$-Impulses, vollständig auf 0 abgefallen ist, läßt sich die Zeitkonstante des Signals des kautschukartigen Polymerisats $b_1$ aus dem weiteren Signalverlauf ermitteln. Hierzu wird die Signalhöhe S bei den Zeiten 100 und 320 ms mit Hilfe des Zusatzgerätes "Analog Computation Unit" gemessen. Die Schaltung dieser Einheit wurde zu diesem Zweck so abgeändert, daß beide Integratoren, die zur Bestimmung von S dienen, miteinander identisch waren. $T_2$ wurde nach der Gleichung:

$$T_2 = 220/\ln (k.S(100)/S (320)$$

unter Annahme eines exponentiellen Signalverlaufs berechnet. k ist ein Korrekturfaktor, der den Einfluß der Magnetinhomogenität berücksichtigt. In vorliegendem Fall war k = 0,9843. Das NMR-Signal wurde in Stellung "Diode" gemessen, um einen störenden Einflup von Magnetfeldschwankungen auszuschließen.

Zur Messung der Relaxationszeiten des kautschukartigen Polymerisats $b_1$ und des Pfropfmischpolymerisats B wurden die genannten Polymeren jeweils mit Magnesiumsulfatlösung aus der Dispersion unter Sauerstoffausschluß ausgefällt, abfiltriert und bei $60°C$ und einem Druck von 1 Torr 16 Stunden lang getrocknet.

BAD ORIGINAL

0022200

Zur Bestimmung der Relaxationszeiten am "unlöslichen Anteil" wird die Formmasse (A + B + ggf. C) mit Methyläthylketon bei 23°C extrahiert. Dazu werden 3 g Formmasse 8 Stunden lang bei 23°C in 135 ml Methyläthylketon gerührt, dann läßt man sie 12 Stunden bei 23°C stehen, zentrifugiert 0,5 Stunden mit 14.000 Upm und dekantiert.

Dieser Vorgang wird noch insgesamt zweimal wiederholt. Danach wird der erhaltene "unlösliche Anteil" 16 Stunden lang bei 60°C im Vakuum bei 1 Torr getrocknet. Anschließend wird die Relaxationszeit bestimmt.

Die Bestimmung der Relaxationszeit der Formmasse geschieht auf folgendem Wege:

1 Probe der erfindungsgemäßen Formmasse wird 7 Stunden lang bei 70°C bei 1 Torr getrocknet und anschließend die Messung vorgenommen.

Die Erfindung wird durch die nachfolgenden Beispiele näher erläutert. Die in den Beispielen genannten Teile und Prozente beziehen sich, sofern nicht anders angegeben, auf das Gewicht.

Herstellung des Mischpolymerisates A

Durch kontinuierliche Lösungspolymerisation nach einem Verfahren wie es beispielsweise im Kunststoff-Handbuch, Vieweg-Daumiller, Band IV, (Polystyrol), Carl-Hanser-Verlag, München 1969, Seite 124, Zeilen 12 ff beschrieben ist, wird ein Copolymerisat, das 65 Gew.-Teile Styrol und 35 Gewichtsteile Acrylnitril einpolymerisiert enthält, hergestellt. Das Copolymerisat hat eine Viskositätszahl von 80.

BAD ORIGINAL

0022200

## Beispiel 1

Herstellung eines Pfropfmischpolymerisates B

a) Herstellung des kautschukartigen Polymerisates $b_1$

In einem Rührkessel aus V2A mit Blattrührer und folgenden technischen Kenndaten

| | | |
|---|---|---|
| Behälteraußendurchmesser x Wanddicke [mm] | 600 x 12 |
| Gehälterhöhe | 705 |
| Gesamthöhe | 1000 |
| Rührerdurchmesser | 300 |
| Rührerhöhe | 270 |
| Bodenabstand des Rührers | 60 |
| Rührerblattstärke | 10 |
| Stromstörerdurchmesser | 35 |
| Bodenabstand des Stromstörers | 162 |
| Wandabstand des Stromstörers | 98 |

Bodenkrümmung nach DIN 28011
Deckelkrümmung nach DIN 28012

werden 48,0 kg destilliertes Wasser, 5,3 kg Butadien, 0,256 kg Natriumstearat, 0,096 kg Kaliumperoxodisulfat, 0,109 kg Natriumhydrogencarbonat und 0,64 kg Terpinolen bei 65°C 0,17 Stunden mit einer Rührerdrehzahl von 70 Upm gerührt. Danach läßt man innerhalb von 5 Stunden 26,7 kg Butadien kontinuierlich zulaufen. Bei einem Umsatz von 80 Gew.%, bezogen auf Butadien, wird die Polymerisation durch Entspannen abgebrochen. Es wird ein Polybutadienlatex erhalten, dessen mittlerer Teilchendurchmesser ($d_{50}$ der integralen Massenverteilung) bei 0,06 um liegt. Der Kautschuk weist eine Relaxationszeit von 1,56 ms auf.

b) Agglomeration und Pfropfung

25,0 kg des vorstehend beschriebenen Polybutadienlatex werden bei 65°C mit 2,0 kg destilliertem Wasser und 3,4 kg einer Emulsion eines Copolymeren aus 96 Gew.-Teilen Äthylacrylat und 4 Gew.-Teilen Methacrylsäureamid mit einem Feststoffgehalt von 10 Gew.-% 1 Stunde gerührt, wobei ein Polyubtadienlatex mit einem mittleren Teilchendurchmesser von 0,35 um ($d_{50}$-Wert der integralen Massenverteilung) entsteht. Nach Zusatz von 0,065 kg Natriumstearat, 0,017 kg Kaliumperoxodisulfat und 2 kg destilliertem Wasser werden 5,6 kg einer Mischung aus Styrol und Acrylnitril im Verhältnis 70:30 innerhalb von 4 Stunden bei 75°C kontinuierlich zugeführt. Die Nachpolymerisationszeit beträgt 1 Stunde. Der Umsatz bezogen auf Styrol-Acrylnitril ist praktisch quantitativ. Die erhaltene Pfropfkautschukdispersion wird mit Magnesiumsulfatlösung gefällt. An einer Probe wird nach dem Trocknen die Relaxationszeit bestimmt. Das abgetrennte Pfropfmischpolymerisat wird mit destilliertem Wasser gewaschen.

Auf einem Mischextruder wird bei 220 bis 250°C eine Granulatmischung hergestellt, die 42 Gew.-Teile Pfropfmischpolymerisat B, 58 Gew.-Teile Mischpolymerisat A und 0,2 Gew.-Teile eines phenolischen Antioxidans (Komponente C) enthält.

Die Kenndaten des kautschukartigen Polymerisats $b_1$, des Pfropfkautschuks B und der Formmasse sowie des aus der Formmasse isolierten "unlöslichen Anteils" sind in der Tabelle 1, die Glanzeigenschaften in der Tabelle 2 zusammen mit ergänzenden Daten angegeben.

Beispiel 2

a) Ein Polybutadienlatex wird, wie in Beispiel 1 beschrieben, hergestellt mit der Ausnahme, daß anstelle Terpinolen 0,256 kg tert.-Dodedylmercaptan zu Beginn der Reaktion und 0,064 kg tert.-Dodecylmercaptan nach 10 Stunden Reaktionszeit zugegeben werden, und daß die Polymerisation bei einem Umsatz von 96 Gew.%, bezogen auf eingesetztes Butadien, abgebrochen wird.

b) 21,0 kg des Polybutadienlatex werden bei 65°C 1 Stunde nach Zusatz von 3,4 kg einer Emulsion eines Copolymeren aus 96 Gew.-Teilen Äthylenacrylat und 4 Gew.-Teilen Methacrylsäureamid mit einem Feststoffgehalt von 10 Gew.-% gerührt, wobei ein Polybutadienlatex mit einer mittleren Teilchengröße von 0,35 μm ($d_{50}$-Wert der integralen Massenverteilung) entsteht. Nach Zusatz von 0,065 kg Natriumstearat, 0,017 kg Kaliumperoxodisulfat und 8,0 kg destilliertem Wasser erfolgt die Pfropfung, Probennahme und Aufarbeitung wie in Beispiel 1 beschrieben.

Beispiel 3

Es wurde, wie in Beispiel 2 beschrieben, verfahren, mit der Ausnahme, daß 0,40 kg tert.-Dodecylmercaptan zu Beginn der Reaktion zugegeben werden.

Beispiel 4

Es wurde entsprechend Beispiel 1 verfahren, jedoch wurden anstelle von Terpinolen 0,064 kg tert.-Dodecylmercaptan zu Beginn der Reaktion zugegeben.

**0022200**

Vergleichsversuche

Vergleichsversuch A

Vergleichsversuch A entspricht Beispiel 4 mit der Ausnahme, daß die Polymerisation nicht bei einem Umsatz von 80 %, sondern von 96 Gew.-%, bezogen auf Butadien, beendet wird und Agglomeration und Pfropfung, wie in Beispiel 2 beschrieben, durchgeführt werden.

Vergleichsversuch B

Entspricht Beispiel 2 mit der Ausnahme, daß zur Herstellung des Butadienlatex 28,8 kg Butadien und 3,2 kg Styrol eingesetzt werden.

Vergleichsversuch C

Es wird ein Polybutadienlatex mit einer mittleren Teilchengröße von 0,5 µm, wie in der GB-PS 859 080 beschrieben, hergestellt und weiterverarbeitet, wie in Beispiel 2 beschrieben.

Wie aus den Werten der Tabelle 1 und 2 ersichtlich ist, besitzen die erfindungsgemäßen Formmassen ein hohes mechanisches Niveau und zugleich ein von den Verarbeitungsbedingungen relativ unabhängiges Glanzniveau. Die nach den Vergleichsversuchen A, B und C hergestellten Formmassen zeigen dagegen allenfalls einen guten Glanz, dann aber eine ungünstige Kerbschlagzähigkeit, insbesondere bei -40°C oder eine gute Zähigkeit, dann aber ein äußerst ungünstiges Glanzverhalten.

Tabelle 1

| Beispiele (erfindungsgemäß) | Relaxationszeit [ms] | | | | $d_{50}$ [µm] Pfropflatex | Kerbschlagzähigkeit [kJ/m²] | |
|---|---|---|---|---|---|---|---|
| | kautschukartiges Polymerisat $b_1$ | Pfropf-kautschuk B | Form-masse | "unlöslicher Anteil" aus Form-masse isoliert | | 23°C | -40°C |
| 1 | 1,56 | 1,40 | 1,3 | 1,3 | 0,35 | 26,1 | 15,9 |
| 2 | 1,46 | 1,07 | 0,16 | 0,98 | 0,35 | 24,8 | 13,9 |
| 3 | 1,70 | 1,18 | 1,27 | 0,91 | 0,35 | 22,4 | 13,9 |
| 4 | 1,45 | 1,1 | 1,06 | 0,85 | 0,35 | 21,6 | 12,9 |
| Vergleichs-beispiele (nicht er-findungsgemäß) | | | | | | | |
| A | 0,86 | 0,88 | 0,96 | 0,63 | 0,35 | 19,4 | 10,9 |
| B | 0,84 | 0,83 | 0,93 | 0,72 | 0,35 | 16,2 | 7,2 |
| C | 0,97 | 0,78 | 0,88 | 0,68 | 0,5 | 20,5 | 10,9 |

1) $T_g$ = Glastemperatur

Tabelle 2 Oberflächenglanz (%)

| | | 230 | | | | 255 | | | | 280 | | | |
|---|---|---|---|---|---|---|---|---|---|---|---|---|---|
| Verarbeitungstemperatur [°C] | | | | | | | | | | | | | |
| Formtemperatur [°C] | | 30 | | 60 | | 30 | | 60 | | 30 | | 60 | |
| Einspritzzeit [sec] | | 0,4 | 2,0 | 0,4 | 2,0 | 0,4 | 2,0 | 0,4 | 2,0 | 0,4 | 2,0 | 0,4 | 2,0 |
| Beispiele (erfindungsgemäß) | 1 | 58 | 52 | 61 | 59 | 60 | 54 | 61 | 60 | 60 | 60 | 60 | 55 |
| | 2 | 57 | 50 | 60 | 59 | 60 | 60 | 61 | 61 | 62 | 58 | 61 | 57 |
| | 3 | 57 | 53 | 61 | 61 | 59 | 52 | 62 | 61 | 57 | 54 | 61 | 56 |
| | 4 | 58 | 51 | 62 | 60 | 59 | 55 | 60 | 61 | 61 | 53 | 61 | 58 |
| Vergleichsversuch (nicht erfindungs- gemäß) | A | 58 | 53 | 60 | 59 | 59 | 57 | 60 | 59 | 61 | 56 | 59 | 57 |
| | B | 58 | 51 | 61 | 61 | 60 | 56 | 61 | 61 | 60 | 53 | 61 | 58 |
| | C | 44 | 37 | 51 | 48 | 45 | 34 | 52 | 45 | 61 | 23 | 50 | 38 |

## Patentansprüche

1. Thermoplastische Formmassen enthaltend

A   wenigstens ein aus einer harten Phase aufgebautes Mischpolymerisat, das

    $a_1$) 60 bis 80 Gew.% Styrol und/oder $\alpha$-Methylstyrol und

    $a_2$) 20 bis 40 Gew.% Acrylnitril

einpolymerisiert enthält

B   wenigstens ein Pfropfmischpolymerisat in einem Anteil von 10 bis 30 Gew.%, bezogen auf A) + B), das aufgebaut ist aus

    $b_1$) 40 bis 80 Gew.%, bezogen auf B) eines kautschukartigen Polymerisats, das wenigstens 93 Gew.% Butadien einpolymerisiert enthält und

    $b_2$) 60 bis 20 Gew.% eines eine harte Phase bildenden Pfropfreises aus den Monomeren Styrol und Acrylnitril in einem Gewichtsverhältnis von 80:20 bis 65:35 und wobei das Pfropfmischpolymerisat durch Aufpfropfen des Gemisches der Monomeren $b_2$) auf das kautschukartige Polymerisat erhalten worden ist,

C   gegebenenfalls üblichen Zusatzstoffen in wirksamen Mengen, dadurch gekennzeichnet, daß das Pfropfmischpolymerisat B) aus Teilchen aufgebaut ist, die einen mittleren Teilchendurchmesser von 0,2 bis 0,45 μm ($d_{50}$-Wert der integralen Masseverteilung) aufweisen und die Relaxationszeit des aus der Formmasse isolierten, unlöslichen Anteils 0,7 bis 1,5 ms beträgt.

2. Formmasse nach Anspruch 1, dadurch gekennzeichnet, daß man ein Emulsionspfropfmischpolymerisat als Komponente B) verwendet.

3. Formmasse nach Anspruch 1, dadurch gekennzeichnet, daß ein Pfropfmischpolymerisat verwendet wird, dessen Relaxationszeit 0,9 bis 1,5 ms beträgt.

4. Formteile aus Formmassen nach Anspruch 1.

Europäisches
Patentamt

EUROPÄISCHER RECHERCHENBERICHT

Nummer der Anmeldung

EP 80 10 3453

| EINSCHLÄGIGE DOKUMENTE | | | KLASSIFIKATION DER ANMELDUNG (int. Cl.) |
|---|---|---|---|
| Kategorie | Kennzeichnung des Dokuments mit Angabe, soweit erforderlich, der maßgeblichen Teile | betrifft Anspruch | C 08 L 25/12 |
| | DE - E - 2 503 966 (BASF) <br> * Ansprüche * <br><br> -- | 1-4 | |
| | DD - A - 71 615 (H. SCHNABEL et al.) <br> * Ansprüche * <br><br> -- | 1-4 | |
| | FR - A - 2 151 874 (BASF) <br> * Anspruch * <br><br> -- | 1-4 | RECHERCHIERTE SACHGEBIETE (int. Cl.) <br><br> C 08 L 25/12 |
| | GB - A - 1 182 943 (MONSANTO) <br> * Ansprüche * <br><br> -- | 1-4 | |
| | GB - A - 1 354 079 (MONSANTO) <br> * Ansprüche * <br><br> -- | 1-4 | |
| | DE - A - 1 911 882 (BASF) <br> * Anspruch * <br><br> -- | 1-4 | |
| | FR - A - 2 139 458 (GOODRICH) <br> * Ansprüche * <br><br> -- | 1-4 | KATEGORIE DER GENANNTEN DOKUMENTE |
| D | DE - B - 2 427 960 (BASF) <br> * Ansprüche * <br><br> ---- | 1-4 | X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung <br> D: in der Anmeldung angeführtes Dokument <br> L: aus andern Gründen angeführtes Dokument |
| Der vorliegende Recherchenbericht wurde für alle Patentansprüche erstellt | | | &: Mitglied der gleichen Patentfamilie, übereinstimmendes Dokument |

| Recherchenort | Abschlußdatum der Recherche | Prüfer |
|---|---|---|
| Den Haag | 30-09-1980 | FOUQUIER |